# EUROPEAN PATENT APPLICATION

(11) **EP 4 768 135 A1**
(43) Date of publication of application: **01.07.2026**
(21) Application number: 25219382.6
(22) Date of filing: 28.11.2025
(51) Int. Cl.: B05B 12/00, B05B 12/08, B05B 12/10, B60S 1/56

(54) **NOZZLE ASSEMBLY FOR CLEANING SENSOR AND SENSOR ASSEMBLY**

(30) Priority: 30.12.2024 CN 202411969993
(71) Applicant: Beijing Voyager Technology Co., Ltd., 100094 Beijing (CN)
(72) Inventor: WANG, Zhenyun, Beijing 100094 (CN); WANG, Wenjun, Beijing 100094 (CN); SUN, Jiangyuan, Beijing 100094 (CN); CHEN, Xiaowei, Beijing 100094 (CN)
(74) Representative: Marks & Clerk LLP

(57) **Abstract**

A nozzle assembly (100) for cleaning a sensor and a sensor assembly are provided. The nozzle assembly (100) includes: a housing (110) including a fluid inlet (1101), at least one spray outlet (1102), and an internal pipeline (1103) connected therebetween, the housing (110) being coupled to the sensor for fluid to clean a surface of the sensor; and an electric control assembly arranged inside the housing and including: an electric control valve (1301) including at least one controllable valve port and coupled to the internal pipeline (1103); a sensor module adapted to at least sense a temperature and/or a pressure in the internal pipeline (1103) and obtain sensor data; and a control circuitry (1302) coupled to the electric control valve (1301) and the sensor module, and configured to control the electric control valve (1301) based on at least one of the sensor data or an external instruction.

## Description

### FIELD

Example embodiments of the present disclosure generally relate to the field of sensor cleaning, and in particular, to a nozzle assembly for cleaning a sensor and a sensor assembly.

### BACKGROUND

With the rapid development of autonomous driving technology, intelligent transportation systems, and industrial automation devices, sensor technology has been increasingly widely used in these fields. Sensors serve as components for perceiving the surrounding environment in automatic driving vehicles, engineering machinery (e.g., a mining truck, port equipment, etc.), industrial machinery and intelligent devices, whose performance and stability are directly related to the safety and operational efficiency of a device. However, when a sensor operates in complex environments, a surface of the sensor is susceptible to contaminants such as rain, dust, mud, frost, snow, leaves, bird droppings and the like. These contaminants may result in a decrease in the accuracy of sensor detection, and even cause a complete loss of perception functionality, thereby endangering normal operation of the device and user safety. Existing nozzle assemblies are currently used to remove the contaminants, but they cannot achieve effective cleaning of the contaminants.

### SUMMARY

In a first aspect of the present disclosure, a nozzle assembly for cleaning a sensor is provided. The nozzle assembly includes: a housing including a fluid inlet, at least one spray outlet, and an internal pipeline in fluid communication with the fluid inlet and the at least one spray outlet, the housing being adapted to be coupled to the sensor for fluid sprayed by the at least one spray outlet to clean a predetermined surface of the sensor; and an electric control assembly arranged inside the housing and including: an electric control valve including at least one controllable valve port and coupled to the internal pipeline, the electric control valve being adapted to be controlled to adjust at least one of a flow rate and a frequency of the fluid sprayed by the at least one spray outlet; a sensor module adapted to at least sense at least one of a temperature and a pressure in the internal pipeline and obtain sensor data; and a control circuitry coupled to the electric control valve and the sensor module, and configured to control the electric control valve based on at least one of the sensor data and an external instruction.

In an embodiment according to the present disclosure, a fluid inlet, at least one spray outlet and an internal pipeline communicating therewith are integrated in the housing, enabling the nozzle assembly to achieve efficient and accurate fluid spraying for cleaning a predetermined surface of the sensor. The housing is adapted to be directly coupled to the sensor, such that the sprayed fluid accurately acts on the predetermined surface of the sensor, effectively removing raindrops, water stains, dirty spots, bird droppings, leaves, dust, mud, freezing, snow, mosquitoes, mosquito remains, debris and other contaminants, and thereby ensuring normal operation and detection precision of the sensor. Further, the electric control valve realizes precise adjustment of the flow rate and frequency of the sprayed fluid through the at least one controllable valve port, satisfying different cleaning requirements. The sensor module senses the temperature and pressure data of the internal pipeline in combination with the real-time control of the electric control valve by the control circuitry, ensuring the efficiency and stability of operation of the nozzle assembly. Meanwhile, based on the dynamic control capability of the sensor data and the external instruction, the nozzle assembly may adjust the cleaning strategy according to actual conditions, improving the fluid use efficiency. Other benefits will be specifically described below in connection with corresponding embodiments.

In some embodiments, the housing further includes an electrical communication port adapted to be connected to an external connector for powering the electric control assembly and/or providing data transmission.

In some embodiments, the nozzle assembly further includes a quick connector arranged at the fluid inlet to facilitate connection with a fluid source.

In some embodiments, the quick connector is coupled to the fluid inlet via a threaded connection or a snap-fit connection, or the quick connector is integrally formed at the fluid inlet.

In some embodiments, the sensor module includes at least one of: a temperature sensor adapted to detect a temperature of at least one of the nozzle assembly or the fluid; or a pressure sensor adapted to detect a pressure of fluid in the internal pipeline.

In some embodiments, the control circuitry is configured to: determine a state of the nozzle assembly based on at least one of the temperature or the pressure; and control operation of the electric control valve based on the state.

In some embodiments, the control circuitry is further configured to: determine, based on the pressure in the internal pipeline exceeding a predetermined threshold, whether at least portion of the at least one spray outlet is in a blocked state; and control, in response to determining that the at least portion of the at least one spray outlet is in the blocked state, operation of the electric control valve to unblock blockage at least by adjusting at least one of an opening degree and an opening/closing frequency of a controllable valve port corresponding to the at least portion of the at least one spray outlet.

In some embodiments, the control circuitry is further configured to: transmit, in response to determining that the at least portion of the at least one spray outlet is in the blocked state, information about the blocked state to an external device.

In some embodiments, the control circuitry is further configured to: determine, based on the pressure in the internal pipeline being below a predetermined threshold, whether the nozzle assembly is in a gas leakage state; and transmit, in response to determining whether the nozzle assembly is in the gas leakage state, information about the gas leakage state to an external device.

In some embodiments, a spray angle of at least portion of the at least one spray outlet is adjustable.

In a second aspect of the present disclosure, a sensor assembly is provided. The sensor assembly includes an environmental sensor configured to sense surrounding environmental information and the nozzle assembly of the first aspect.

In some embodiments, the environmental sensor includes at least one of a laser radar, a camera, an ultrasonic radar, an infrared radar, or a millimeter wave radar.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements. In the drawings:

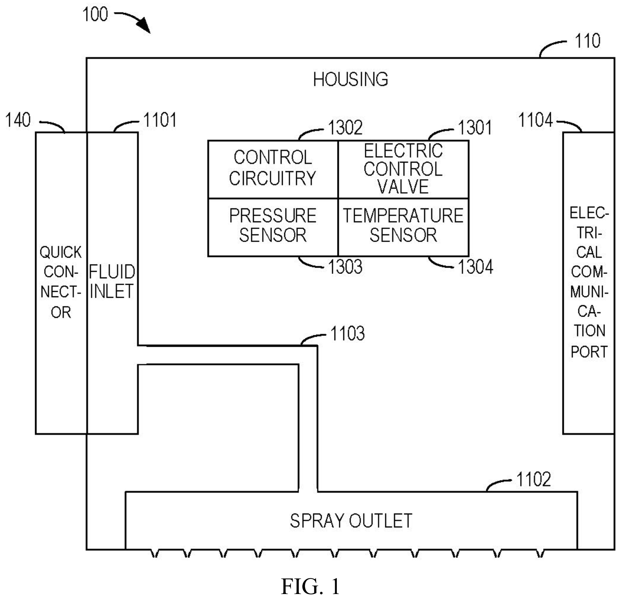

FIG. 1 illustrates a schematic structural view of a nozzle assembly according to some embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as being limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments are described throughout and any type of embodiments may be included in any section/subsection. Furthermore, the embodiments described in any section/subsection may be combined in any manner with any other embodiment described in the same section/subsection and/or different sections/subsections.

In the description of the embodiments of the present disclosure, the terms "including" and the like should be understood as an opened inclusion, i.e., "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first", "second", and the like may refer to different or identical objects. Other explicit and implicit definitions may also be included below.

As used herein, the term "model" may learn associations between respective inputs and outputs from training data such that corresponding outputs may be generated for a given input after training is completed. The generation of the model may be based on machine learning techniques. Deep learning is a machine learning algorithm that processes inputs and provides respective outputs by using a multi-layer processing unit. The "model" herein may also be referred to as a "machine learning model", "machine learning network" or "network", which terms are used interchangeably herein. A model may also include different types of processing units or networks.

As used herein, a "unit", an "operating unit", or a "subunit" may be composed of a machine learning model or network of any suitable structure. As used herein, a set of elements or similar expressions may include one or more such elements. For example, a "set of convolution units" may include one or more convolution units.

As mentioned briefly above, existing nozzle assemblies cannot effectively clean contaminants on the surface of the sensor. Specifically, in the existing nozzle assemblies, a solenoid valve and a nozzle are arranged as independent components, which are connected through a connector and a pipeline. Such a separate arrangement requires addition of several additional connectors and pipeline components, increasing the manufacturing cost, the transportation cost, and the assembling and management cost of the nozzle assembly.

Further, the connection reliability of the nozzle assembly is poor. Specifically, the nozzle and the solenoid valve are connected through a connector and a gas pipe. Such a multi-point connection mode has poor reliability and stability, especially at high frequency use or extreme environments (such as high temperature and high pressure), and is prone to problems such as connector loosening, seal failure and the like. The increase of connection points can also directly increase the risk of gas leakage and reduce the durability and the service life of the nozzle assembly.

In a conventional nozzle assembly, after the solenoid valve is opened, high-pressure gas needs to be delivered to a nozzle through a pipeline to complete the cleaning by spraying fluid. Due to the existence of the pipeline, the gas generates a certain fluid resistance during delivery, and meanwhile, a length and a shape of a connecting gas pipe may also cause pressure loss. These factors collectively result in a slower response speed of the nozzle assembly and decreased cleaning efficiency, making it difficult to meet the needs of rapid cleaning, especially in dynamic environments.

Meanwhile, the connecting gas pipe between the solenoid valve and the nozzle of the nozzle assembly remains an unpressurized space in a non-spraying state, and when the solenoid valve is opened, the gas needs to first fill the pipeline to establish a certain pressure difference, and then can be sprayed out from the nozzle. This results in insufficient initial spray pressure of the nozzle, leading to poor cleaning effects. Especially when the pipeline is long, the gas pressure loss is more significant, the spray effect is remarkably reduced with a fixed gas discharge volume per spray, making it difficult to effectively clean the surface of the sensor.

In addition, the conventional nozzle assembly requires an additional pipeline and connector components, significantly increasing the complexity of the nozzle assembly. This not only increases the workload of installation and debugging but also increases the possibility of failure and the difficulty of subsequent maintenance.

In order to address or at least partially solve the above problems or other potential problems of the existing nozzle assembly for cleaning a sensor, embodiments of the present disclosure provide a solution with a nozzle assembly for cleaning a sensor and a sensor assembly. The nozzle assembly includes a housing. The housing includes a fluid inlet, at least one spray outlet, and an internal pipeline in fluid communication with the fluid inlet and the at least one spray outlet, and the housing is adapted to be coupled to the sensor for fluid sprayed by the at least one spray outlet to clean a predetermined surface of the sensor. Further, an electric control assembly is arranged inside the housing. The electric control assembly includes an electric control valve. The electric control valve includes at least one controllable valve port and is coupled to the internal pipeline, and the electric control valve is adapted to be controlled to adjust at least one of a flow rate and a frequency of the fluid sprayed by the at least one spray outlet. The electrical control assembly includes a sensor module adapted to at least sense at least one of a temperature or a pressure in the internal pipeline and obtain sensor data. The electric control assembly includes a control circuitry coupled to the electric control valve and the sensor module and configured to control the electric control valve based on at least one of sensor data and an external instruction.

In this way, the fluid inlet, the spray outlet, the internal pipeline and the electric control assembly are combined into the housing through an integrated design of the nozzle assembly, thereby significantly improving the compactness and reliability of the nozzle assembly. Through the adaptive coupling of the housing and the sensor, the nozzle can be accurately aligned with the predetermined surface of the sensor for fluid spray cleaning, effectively removing contaminants, and ensuring the detection performance of the sensor. The electric control valve in the electric control assembly can flexibly adjust the flow rate and the frequency of the fluid spraying, thereby adapting to different cleaning requirements, and improving the cleaning efficiency and effect. The sensor module monitors the temperature and pressure in the internal pipeline in real time, provides operation data, and combines the control function of the control circuitry, realizing accurate adjustment of a spraying state of the nozzle, and further improving the response speed and the operational stability of the nozzle assembly. In addition, the electric control assembly can perform autonomous adjustment based on the sensor data and the external instruction, ensuring the cleaning under different working conditions.

An example structure and working process of a nozzle assembly 100 in a sensor assembly will be described below in conjunction with FIG. 1. The nozzle assembly 100 according to embodiments of the present disclosure includes an environmental sensor and a nozzle assembly 100. The sensor assembly can monitor surrounding environment information in real time by integrating the environmental sensor and the nozzle assembly 100, and clean a detection surface of the environmental sensor (that is, the predetermined surface described above) through the nozzle assembly 100, to prevent contaminants on the detection surface from affecting the detection performance of the environmental sensor.

Specifically, the environmental sensor includes a detection surface (such as a lens, a window, or a housing surface) for sensing various information in the surrounding environment, such as visual information, distance and spatial information, temperature information, humidity and weather information, ambient lighting information, audio information, air quality information, magnetic field information, vibration and acceleration information, or other information. It may be understood that the environmental sensor is arranged in an area exposed to the outside, and the detection surface of the environmental sensor is easily influenced by rainwater, dust, mud, leaves and other contaminants, that is, the cleanliness of the detection surface directly affects the performance of the sensor and the accuracy of the output data.

Further, the detection surface of the environmental sensor is cleaned by the nozzle assembly 100. The nozzle assembly 100 is used in conjunction with the environmental sensor, and arranged at a position adjacent to the environmental sensor. The nozzle assembly 100 adjusts a spray pressure, a flow rate, a frequency and an angle of the fluid to clean a predetermined surface of the sensor, so as to achieve efficient cleaning.

In some embodiments, the nozzle assembly 100 may be linked with data feedback of the environmental sensor. For example, when the environmental sensor detects that the detection surface is contaminated, the nozzle assembly 100 may initiate a cleaning process, and spray fluid to clean the detection surface. The nozzle assembly 100 may also be combined with an external control system to initiate or adjust a cleaning operation by receiving external instructions, thereby ensuring that the sensor maintains good performance and high detection accuracy in various working environments.

In this way, by integrating the nozzle assembly 100 and the environmental sensor into a single unit, the sensor assembly can provide continuous and reliable performance in a variety of application scenarios, reducing maintenance requirements, and improving the stability and operational efficiency of cleaning the sensor.

In some embodiments, the environmental sensor may include any one or more of the following types of sensors: a laser radar, a camera, an ultrasonic radar, an infrared radar, and a millimeter wave radar.

Specifically, the laser radar may be configured to measure a distance and a shape of a target object, and has a high-precision spatial perception capability; however, its surface optical window is easily contaminated by dust, rainwater or other debris, thereby affecting its measurement accuracy. Further, the camera is used for visual information acquisition, such as environment perception of an autonomous vehicle, image acquisition of a monitoring device, or the like, and a lens surface of the camera needs to be kept clean to avoid degradation of imaging quality. Further, the ultrasonic radar performs distance perception of a target object by using an ultrasonic signal, which may be used for a parking assistance system of a vehicle; however, a probe of the ultrasonic radar is prone to accumulate dirt in severe environments, affecting functionality. Further, the infrared radar detects an object and an environment by sensing a heat radiation or an infrared light signal, and a lens surface of the infrared radar is interfered by stains and affects heat signal conduction. Further, the millimeter wave radar is configured to detect a speed, a direction and a distance of an object and is used for vehicle collision avoidance and environment perception, and a surface antenna window of the millimeter wave radar is also covered by contaminants, reducing the signal propagation and receiving efficiency.

Any of the above sensors may work in cooperation with the nozzle assembly 100, and the nozzle assembly 100 may adjust a cleaning strategy, such as including a spray pressure, a flow rate, an angle, a frequency, etc., according to a type of the sensor and contaminant conditions, to perform effective cleaning on the detection surface or a sensing component of the sensor. This not only ensures continuous and stable operation of the sensor, but also prolongs the service life of the sensor.

The specific structure of the nozzle assembly 100 will be described below with reference to FIG. 1. In an embodiment of the present disclosure, the nozzle assembly 100 generally includes a housing 110 and an electric control assembly for accurately controlling a flow rate and a frequency of the sprayed fluid, thereby achieving an efficient sensor cleaning function.

Specifically, the housing 110 includes a fluid inlet 1101, at least one spray outlet 1102, and an internal pipeline 1103 connecting the fluid inlet 1101 and the spray outlet 1102. The fluid inlet 1101 is connected to a cleaning fluid source through an adapter interface, and for example, the fluid source is a high-pressure gas. The at least one spray outlet 1102 directs fluid through the internal pipeline 1103 to a predetermined surface of the sensor for cleaning, and the number and of spray outlets 1102 and a spraying mode of the spray outlet 1102 may be configured according to cleaning requirements. The housing 110 is adapted to be coupled to a surface of the sensor, ensuring that the sprayed fluid can act directly on the surface of the sensor, removing contaminants such as dirt, raindrops, dust, or the like. For example, the housing 110 of the nozzle assembly 100 may be a housing structure of an entire apparatus, for example for cleaning the sensor. In addition, a material of the housing 110 may be selected according to actual environmental requirements, and may be made of a material with high temperature resistance, corrosion resistance and ultraviolet resistance, including but not limited to metal, carbon fiber, plastic, and other materials.

Further, the electric control assembly is arranged inside the housing 110. The electric control assembly includes an electric control valve 1301, a sensor module and a control circuitry 1302. Further, the electric control valve 1301 includes at least one controllable valve port and is connected to the internal pipeline 1103. The electric control valve 1301 is configured to adjust at least one of a flow rate and a frequency of the sprayed fluid through an external control signal, so as to perform precise control according to different cleaning conditions. For example, the electric control valve 1301 may be a solenoid valve, a proportional valve or other types of valves suitable for fluid control, which is not specifically limited in the embodiments of the present disclosure. By controlling an opening degree and a frequency of the electric control valve 1301, a spray pressure, a spray duration and a spray interval of the fluid can be adjusted, thereby improving the cleaning effect and avoiding excessive consumption of the fluid.

In some embodiments, a diameter and a cumulative diameter of the controllable valve port may be adjusted, and a material of the controllable valve port may be selected according to actual environmental requirements. A material with high temperature resistance, low temperature resistance, high pressure resistance and durability may be used, but the material is not limited to plastic, metal, carbon fiber, and the like. In addition, the number of opening/closing operations of the controllable valve port may meet the whole life cycle of the nozzle assembly. For example, the controllable valve port may adapt to 12V and 24V power supply systems, and has high speed opening/closing response performance.

Further, the sensor module is disposed inside the housing 110 for sensing a working state of the internal pipeline 1103 of the nozzle assembly 100. Specifically, by sensing sensor data of at least one of a temperature or a pressure through the sensor module, the control circuitry 1302 may determine whether the fluid is in a normal working state in real time and make an adjustment in time. The sensor data may also be used for fault diagnosis. For example, when the temperature is too high or the pressure is too low, the control circuitry 1302 may issue an alarm or take an automatic adjustment measure to prevent damage or performance degradation of the nozzle assembly 100.

Further, the control circuitry 1302 is coupled to the electric control valve 1301 and the sensor module, and is configured to adjust a state of the electric control valve 1301 according to data acquired by the sensor and an external instruction (for example, an instruction of a vehicle control system). The control circuitry 1302 may not only automatically adjust a spray condition of the fluid according to the real-time monitored temperature and pressure data, but also may receive the external instruction, such as a cleaning mode, a cleaning cycle or a cleaning intensity manually set by a user. For example, the control circuitry 1302 includes components such as a microprocessor, a circuit board, and a control chip, which may perform complex operations and decisions to ensure that the nozzle assembly 100 can operate efficiently and stably in various working environments.

During use, the external control system or sensor data sends a control signal to the electric control valve 1301 through the control circuitry 1302, to adjust an opening degree of the valve port, and then control the flow rate and the frequency of the sprayed fluid. The sensor module continuously monitors the temperature and the pressure within the internal pipeline 1103 and feeds monitoring data back to the control circuitry 1302 to further adjust a fluid spraying state. For example, in a low temperature environment, the control circuitry 1302 may automatically increase the flow rate of the fluid to ensure that the cleaning effect is not affected; and in the case where the pressure is too high, the control circuitry may also automatically decrease the flow rate or adjust a spraying frequency, thereby avoiding damage to the surface of the sensor caused by excessive spray.

In addition, the control circuitry may also receive instructions from the outside, such as an operation setting of a central control system or a user of the vehicle. These instructions may control an opening/closing time, a spraying frequency (e.g., continuous spraying or spraying at a fixed/variable frequency), a cleaning mode, etc. of the nozzle, ensuring that the nozzle assembly 100 can be flexibly adapted in different operating scenarios. For example, in a rainy or dirty environment, the nozzle assembly 100 may automatically increase the spraying frequency and the flow rate, while in an environment with low cleaning requirements, spray parameters may be adjusted to save resources.

In this way, the nozzle assembly 100 enables precise fluid control, ensuring a cleaning effect and extending the service life of the device. The cooperation of the electric control valve 1301 and the control circuitry 1302 enables more efficient fluid utilization and reduces energy waste in the cleaning process. Through real-time feedback of the sensor data, the control circuitry 1302 can timely detect abnormal conditions, such as excessive temperature or pressure, avoiding damage to the device due to improper operation. According to the external instruction and changes of internal sensor data, the nozzle assembly 100 can be flexibly adjusted under different environments and working conditions to meet different cleaning requirements for the sensor. In addition, the nozzle assembly 100 can not only reduce production manufacturing, manage transportation and assembling costs, but also eliminate redundant pipelines and connectors, and the nozzle assembly 100 has higher integration level and is more concise.

In some embodiments, the housing 110 of the nozzle assembly 100 further includes an electrical communication port 1104. The electrical communication port 1104 is connected to an external connector for providing power and data transmission required by the electric control assembly. Specifically, the electrical communication port 1104 is connected to an external control system through a standardized interface, supporting providing a required power supply (for example, 12V, 24V, or other voltage) for the electric control assembly inside the nozzle assembly 100, and ensuring normal operation of the electric control assembly. In addition, the electrical communication port 1104 may also be configured to perform data interaction with an external control system (such as a vehicle-mounted computer system of a vehicle, a sensor management system, etc.) to implement a data transmission function.

Further, the electrical communication port 1104 may be connected to the external connector through a wired connection. Through the wired connection, the electric control assembly can receive power supply provided by an external device, and meanwhile, data can also be transmitted in a bidirectional manner through the connection mode. In addition, the wired connection can also avoid unstable communication due to wireless signal interference and is suitable for scenarios with relatively high reliability requirements.

Additionally or alternatively, the electrical communication port 1104 may also exchange data with the external device in a wireless transmission mode. In this case, the electric control component may perform data communication with the external device or a cloud system through a wireless module (for example, Wi-Fi, Bluetooth, Zigbee, etc.) without a physical connector connection. This wireless communication mode provides more flexibility for cleaning the sensor and may be applied to an application scenario with limited space or remote control. For example, the sensor module may upload real-time data to the cloud system in a wireless mode for analysis and decision-making by the user or a background monitoring system, and may also receive an instruction from the cloud for operation adjustment.

Additionally or alternatively, the electrical communication port 1104 may also include a dual-mode communication, i.e., wired communication and wireless communication. Specifically, when the nozzle assembly 100 is connected to the external device in a short distance, high-bandwidth and low-latency data transmission may be performed by using the wired communication, and in a case of a long distance or where flexible installation is required, communication may be switched to the wireless communication mode. In this way, the nozzle assembly 100 can adaptively select a suitable communication mode in different working environments, thereby ensuring the stability and efficiency of the nozzle assembly 100.

Further, the electrical communication port 1104 may adopt a dustproof and waterproof interface structure to adapt to severe conditions such as high temperature, humidity and vibration in a vehicle-mounted environment. For example, the nozzle assembly 100 may meet dustproof and waterproof grade of IP67 or higher and wholevehicle EMC requirements. The selection of an interface of the electrical communication port 1104 may adopt different standards according to actual requirements, for example, a CAN bus interface, a LIN bus interface, a PWM interface, a USB interface, an RJ45 interface or a dedicated connection connector, etc., and the user may select to adapt different connection modes as needed, which is not specifically limited in the embodiments of the present disclosure. In addition, a plurality of PIN pins of the electrical communication port 1104 may be arranged to ensure subsequent scalability.

In this way, the electrical communication port 1104 may not only provide power but also communicate with devices such as an external controller, a sensor system, and the like, for transmitting parameters including but not limited to a sensor status, device diagnostic information, temperature and pressure data, cleaning mode settings, and the like.

In some embodiments, the nozzle assembly 100 further includes a quick connector 140. The quick connector 140 is arranged at the fluid inlet 1101 of the housing 110 and is intended for quick and convenient connection with an external fluid source. Specifically, the quick connector 140 may enable the nozzle assembly 100 to quickly interface with a fluid source, such as a compressed air source, reducing the time required for the connection and the operational complexity.

Further, the quick connector 140 may adopt a standardized interface structure to adapt to different types and sizes of fluid pipelines. Through a simple inserting action, the quick connector 140 can be firmly connected to an interface of the pipeline, ensuring no fluid leakage and a stable connection, and avoiding the problem of leakage caused by improper connection. The quick connector 140 has efficient sealing performance, and can ensure a sealing effect in a high-pressure or complex environment.

In this way, by providing the quick connector 140, the nozzle assembly 100 can be quickly and reliably connected to the fluid source, further improving the installation, maintenance and replacement of the nozzle assembly 100, and improving the working efficiency and reliability of the nozzle assembly 100.

In some embodiments, the quick connector 140 may be connected to the fluid inlet 1101 in two modes to ensure a stable connection and efficient fluid transfer between the nozzle assembly 100 and the fluid source. Specifically, the quick connector 140 may be coupled to the fluid inlet 1101 by a threaded connection or a snap-fit connection. The threaded connection may provide a relatively firm fixing effect and is suitable for application scenarios with higher connection strength and long-term stability; and the snap-fit connection is more convenient, and can achieve quick connection and disconnection through simple plug-in and plug-out actions, making it suitable for scenarios where the fluid source is frequently replaced and maintenance is carried out. Whether threaded connection or snap-fit connection can ensure that the fluid leakage is prevented and maintain the stability of the fluid flow. In some embodiments, the quick connector 140 may be of a pluggable type, or of a plug-in-only type, i.e., which cannot be plugged out. However, it is not specifically limited in the embodiments of the present disclosure.

Additionally or alternatively, the quick connector 140 is integrally formed at the fluid inlet 1101. Specifically, the quick connector 140 is directly integrated into a portion of the fluid inlet 1101 of the housing 110, and the quick connector 140 is integrated with the housing 110 by an integral-formation process. This structure can simplify the manufacturing process, reduce the number of parts, and improve the integration level of the nozzle assembly 100 and the compactness of the structure. This makes a connection portion of the nozzle assembly 100 more robust and reliable, not only avoiding the problem of loosening or water leakage caused by the external connection component, but also improving the durability and stability of the nozzle assembly 100. In addition, the quick connector 140 may also be connected to the fluid inlet 1101 by laser welding or potting. A material of the quick connector 140 may be selected according to actual environmental requirements, and may adopt a material having high temperature resistance, low temperature resistance, high pressure resistance and durability.

In some embodiments, the sensor module of the nozzle assembly 100 includes at least one of a temperature sensor 1304 or a pressure sensor 1303 for monitoring a working state of the nozzle assembly 100 in real time, so as to ensure the efficiency and safety of fluid spraying.

Specifically, the temperature sensor 1304 is configured to detect a temperature of the nozzle assembly 100 or the fluid. The temperature sensor may monitor changes in temperature inside the nozzle assembly 100 in real time to prevent instability operation or damage of the nozzle assembly 100 due to excessive high or low temperature. For example, the temperature sensor 1304 may be disposed at a nozzle outlet to monitor a temperature of fluid spraying, ensuring that the sprayed fluid is within a predetermined working range; or may be disposed at a portion of the housing 110 of the nozzle assembly 100 to detect a temperature of the nozzle assembly 100 itself, avoiding a fault caused by overheating. The temperature sensor 1304 may provide accurate temperature data for the control circuitry 1302 to perform adjustment or send an alarm in real time, ensuring that the nozzle assembly 100 is always operating within a safe temperature range.

Further, the pressure sensor 1303 is configured to detect a pressure of the fluid in the internal pipeline 1103. The pressure sensor 1303 may monitor a change of the pressure of the fluid in the pipeline in real time, ensuring a stable supply of the fluid, and preventing the performance of the nozzle assembly 100 from being affected by excessive high or low pressure. The pressure sensor 1303 may be disposed at the fluid inlet 1101 of the internal pipeline 1103 or near a pipe section of the nozzle, to acquire pressure data in the pipeline in real time. The pressure sensor 1303 is used for ensuring that the nozzle assembly 100 is always maintained within a set pressure range, preventing unstable spray effect due to pressure fluctuation, or avoiding safety issues such as leakage caused by excessive high pressures. In addition, a material of the pressure sensor 1303 may be selected according to actual environmental requirements, and may use a material having high temperature resistance, low temperature resistance, high pressure resistance, and durability.

By integrating the temperature sensor 1304 and the pressure sensor 1303, the sensor module can provide a real-time monitoring function for the nozzle assembly 100, facilitating the nozzle assembly 100 to dynamically adjust spraying (such as automatically adjusting a flow rate when the temperature or pressure is too high), and can also provide fault diagnosis data, effectively maintaining the nozzle assembly 100. In addition, materials of the temperature sensor 1304 and the pressure sensor 1303 may be selected according to actual environmental requirements, and materials having high temperature resistance, low temperature resistance, high pressure resistance, and durability may be used.

In some embodiments, the control circuitry 1302 of the nozzle assembly 100 is configured to have a selfdiagnostic function, determine a working state of the nozzle assembly 100 according to the temperature and pressure data monitored in real time, and control an operation of the electric control valve 1301 based on state information.

Specifically, a state of the nozzle assembly 100 is determined based on at least one of a temperature or pressure data. The control circuitry 1302 may receive real-time data from the temperature sensor 1304 and the pressure sensor 1303. The temperature sensor 1304 may provide information about the nozzle assembly 100 or fluid temperature, and the pressure sensor 1303 may provide data regarding pressure in a fluid pipeline. The control circuitry 1302 evaluates an operating state of the nozzle assembly 100 in real time based on these data. For example, when the temperature or pressure exceeds a predetermined normal range, the control circuitry 1302 can identify abnormal conditions of the nozzle assembly 100, such as overheating, overpressure, or excessive low pressure.

Further, the operation of the electric control valve 1301 is controlled based on the state. If the control circuitry 1302 detects that the temperature is too high or the pressure is too low, the control circuitry 1302 may change a flow rate of the fluid by adjusting an opening degree of the electric control valve 1301, so as to prevent the nozzle assembly 100 from being damaged or avoiding the reduction of the working efficiency. In addition, the control circuitry 1302 may also adopt different response strategies according to different abnormal conditions, for example, closing the electric control valve 1301 to prevent further damage to the nozzle assembly 100, or adjusting a spraying frequency and the flow rate to resume the normal operation.

Further, the self-diagnosis function of the control circuitry 1302 is not limited to real-time state monitoring, but also includes fault diagnosis and alarm. When the sensor data such as the temperature and the pressure exceeds a set safety range, the control circuitry may automatically identify and trigger a corresponding alarm signal to prompt the user to perform equipment inspection or maintenance. Meanwhile, by continuously monitoring the sensor data, the control circuitry 1302 can also evaluate whether a fault or deviation exists in the sensor module, thereby preventing the nozzle assembly 100 from failing.

In some embodiments, the control circuitry 1302 is further configured to have a nozzle blockage self-diagnosis function and a self-unblocking function for blockages, and may determine whether there is a blockage in the nozzle assembly 100 according to the pressure data in the internal pipeline 1103, and effectively unblock the blockage by adjusting the operation of the electric control valve 1301, ensuring normal spray operation of the fluid.

Further, the control circuitry 1302 monitors the fluid pressure in the internal pipeline 1103 and compares a real-time pressure value to a predetermined normal working threshold. If it is detected that the pressure value exceeds a predetermined threshold (i.e., flowing of the fluid is blocked), the control circuitry 1302 determines that there is a blockage in the at least one spray outlet 1102. In other words, when the fluid cannot pass through a blocked nozzle, the pressure in the internal pipeline 1103 rises sharply, thereby triggering the abnormality detection function of the control circuitry 1302.

Further, when it is determined that there is a blockage in the nozzle, the control circuitry 1302 automatically controls the operation of the electric control valve, and takes an effective measure to unblock the blockage. Specifically, the control circuitry 1302 may unblock the blockage by adjusting at least one of the opening degree (i.e., the extent of opening) or an opening/closing frequency of a port of the electric control valve 1301 corresponding to the at least portion of the blocked nozzle. For example, the control circuitry 1302 can increase an opening time of the electric control valve, extend a spraying period, or increase the spraying frequency, thereby increasing an impact force of the fluid (e.g., high-pressure gas) to help unblock the blocked portion. In addition, the control circuitry 1302 may also adjust the flow rate of spraying by variable frequency to ensure adequate cleaning and recovery of the blocked nozzle.

Further, after the blockage is detected, the control circuitry 1302 continuously monitors the state of the nozzle assembly 100 and automatically adjusts a spray condition until the blockage is unblocked. In this way, the nozzle assembly 100 may automatically clean the blockage without manual intervention, ensuring that the nozzle assembly 100 is in a good working state. If the blockage is unblocked, the feedback of the pressure sensor 1303 will return to the normal range, and the control circuitry 1302 will automatically switch back to the normal operation mode.

In some embodiments, the control circuitry 1302 is further configured to, upon determining that the at least portion of the spray outlet 1102 is in the blocked state, transmit information about the blocked state to an external device. Specifically, the control circuitry 1302 performs information interaction with an external device (such as a vehicle control system, a diagnostic tool, or a user terminal device) through a built-in communication module. When the control circuitry 1302 detects, through the pressure sensor 1303 and other monitoring components, an abnormal condition in which the spray outlet 1102 is blocked, the control circuitry 1302 automatically generates a fault message, including detailed information such as a position of the blockage, a severity of the blockage, and an influence on the operation of the nozzle assembly 100.

Further, such information transmission may be accomplished through wireless communication (e.g., Bluetooth, Wi-Fi, or cellular network) or wired communication (e.g., a CAN bus, a LIN bus, etc.). After receiving blockage information, the external device may send an alarm prompt to the user or maintenance personnel, or automatically trigger further diagnosis and repair procedures.

It may be understood that, in the embodiments of the present disclosure, control and diagnosis modes not only include IO driving modes (for example, low-side drive, high-side drive, PWM drive, HSD drive, etc.), but also support multiple bus control modes (including but not limited to CAN bus, LIN bus, FlexRay, Ethernet, IIC, RS232/485, etc.), and the controller may be directly integrated inside an assembly of the nozzle assembly 100, to implement high integration, or may exist as an independent controller unit to adapt to architectural requirements of different cleaning sensors, which is not specifically limited in the embodiments of the present disclosure.

In some embodiments, the control circuitry 1302 is further configured to have a function of detecting and diagnosing a gas leakage state. When the nozzle assembly 100 operates, the control circuitry 1302 may determine whether the nozzle assembly 100 is in a gas leakage state based on the pressure data in the internal pipeline 1103, and transmit related information to the external device for further processing when the gas leakage is found.

Further, the control circuitry 1302 may monitor a pressure value in the internal pipeline 1103 in real time. Under normal conditions, the fluid inside the internal pipeline 1103 is maintained within a predetermined pressure range. When the nozzle assembly 100 leaks, the pressure in the internal pipeline 1103 drops below a set normal working threshold. The control circuitry 1302 may detect the pressure abnormality and determine that the nozzle assembly 100 has a problem of gas leakage by comparing with a predetermined pressure threshold.

Further, the control circuitry 1302 determines that the nozzle assembly 100 is in the gas leakage state, and will automatically generate and transmit an alarm message about the gas leakage state to the external device. The external device may be a primary control system, a maintenance diagnostic tool, a user terminal, or the like of a vehicle. With the information transmission, the external device may issue a gas leakage warning to an operator in time, or record a gas leakage event for subsequent maintenance processing.

Further, the information transmission may be accomplished through wireless communication (for example, Wi-Fi, Bluetooth, etc.) or wired communication (for example, a CAN bus, a LIN bus, etc.). After receiving the gas leakage information, the external device may display a warning prompt, which helps the maintenance personnel locate a gas leakage source timely and take corresponding repair measures, avoiding the reduction of the efficiency of the nozzle assembly 100 and further damage to the nozzle assembly 100 due to the gas leakage.

In some embodiments, a spray angle of at least portion of the at least one spray outlet 1102 is adjustable, so that the nozzle assembly 100 can flexibly adjust a direction of the sprayed fluid according to different cleaning requirements or mounting environments, thereby improving the cleaning efficiency and satisfying the cleaning requirements of different sensors.

Further, the spray angle of the spray outlet 1102 may be controlled by a built-in adjustment mechanism. The adjustment mechanism may take a variety of forms, such as mechanical adjustment, electric adjustment, or hydraulic adjustment, which is not specifically limited in the embodiments of the present disclosure. The spray outlet 1102 in the nozzle assembly 100 may be equipped with a rotatable nozzle component, and the spray outlet 1102 may rotate or tilt about one or more axes to change a direction of the spray outlet 1102. The adjustment mode may be manual or electric, and the control circuitry 1302 is automatically adjusted according to requirements.

Further, the angle of the spray outlet 1102 may also be automatically adjusted by an electric driving device. The control circuitry 1302 may control an electric motor or a servo motor to precisely adjust the angle of the nozzle component. The automatic adjustment mode may combine with the sensor data and adjust the spray angle in real time to ensure the cleaning effect.

Further, the adjustable function of the spray angle of the spray outlet 1102 may be applied to a sensor such as a camera (for example, a remote distance camera, a medium distance camera, a short distance camera), a laser radar, a millimeter wave radar, an infrared camera, a traffic light recognition camera, a fisheye camera, an ultrasonic radar, or other vehicle-mounted sensors. In other words, the nozzle assembly 100 may be applied to a remote vehicle, and is not limited to a vehicle automobile, a mine truck, a port device, and an industrial machine, which is not specifically limited in the embodiments of the present disclosure. By adjusting the spray angle, the nozzle assembly 100 may control a spraying direction of the cleaning fluid according to a mounting angle of the sensor, surrounding environment and a distribution condition of contaminants, thereby improving the cleaning effect and reducing the energy consumption.

Further, the control circuitry 1302 may monitor the angle of the nozzle in real time through an angle sensor, to ensure that the spray angle is adjusted within a predetermined range. When the user or the operator needs to adjust the spray angle, the control circuitry 1302 may receive commands through an external interface and automatically adjust, or automatically adjust the spray angle according to preset content of the control circuitry 1302 in a specific working environment.

Various implementations of the present disclosure have been described above, which are illustrative, not exhaustive, and are not limited to the implementations disclosed. Many modifications and variations will be apparent to those of ordinary skill in the art without departing from the scope of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A nozzle assembly (100) for cleaning a sensor, comprising:
a housing (110) comprising a fluid inlet (1101), at least one spray outlet (1102), and an internal pipeline (1103) in fluid communication with the fluid inlet (1101) and the at least one spray outlet (1102), the housing (110) being adapted to be coupled to the sensor for fluid sprayed by the at least one spray outlet (1102) to clean a predetermined surface of the sensor; and
an electric control assembly arranged inside the housing (110) and comprising:
an electric control valve (1301) comprising at least one controllable valve port and coupled to the internal pipeline (1103), the electric control valve (1301) being adapted to be controlled to adjust at least one of a flow rate or a frequency of the fluid sprayed by the at least one spray outlet (1102);
a sensor module adapted to at least sense at least one of a temperature or a pressure in the internal pipeline (1103) and obtain sensor data; and
a control circuitry (1302) coupled to the electric control valve (1301) and the sensor module, and configured to control the electric control valve (1301) based on at least one of the sensor data or an external instruction.

2. The nozzle assembly (100) of claim 1, wherein the housing (110) further comprises:
an electrical communication port (1104) adapted to be connected to an external connector for powering the electric control assembly and/or providing data transmission.

3. The nozzle assembly (100) of claim 1 or 2, further comprising:
a quick connector (140) arranged at the fluid inlet (1101) to facilitate connection with a fluid source.

4. The nozzle assembly (100) of claim 3, wherein the quick connector (140) is coupled to the fluid inlet (1101) via a threaded connection or a snap-fit connection, or
the quick connector (140) is integrally formed at the fluid inlet (1101).

5. The nozzle assembly (100) of any one of claims 1, 2 and 4, wherein the sensor module comprises at least one of:
a temperature sensor (1304) adapted to detect a temperature of at least one of the nozzle assembly (100) or the fluid; or
a pressure sensor (1303) adapted to detect a pressure of fluid in the internal pipeline (1103).

6. The nozzle assembly (100) of claim 5, wherein the control circuitry (1302) is configured to:
determine a state of the nozzle assembly (100) based on at least one of the temperature or the pressure; and
control operation of the electric control valve (1301) based on the state.

7. The nozzle assembly (100) of claim 6, wherein the control circuitry (1302) is further configured to:
determine, based on the pressure in the internal pipeline (1103) exceeding a predetermined threshold, whether at least portion of the at least one spray outlet (1102) is in a blocked state; and
control, in response to determining that the at least portion of the at least one spray outlet (1102) is in the blocked state, operation of the electric control valve to unblock blockage at least by adjusting at least one of an opening degree or an opening/closing frequency of a controllable valve port corresponding to the at least portion of the at least one spray outlet (1102).

8. The nozzle assembly (100) of claim 7, wherein the control circuitry (1302) is further configured to:
transmit, in response to determining that the at least portion of the at least one spray outlet (1102) is in the blocked state, information about the blocked state to an external device.

9. The nozzle assembly (100) of claim 6, wherein the control circuitry (1302) is further configured to:
determine, based on the pressure in the internal pipeline (1103) being below a predetermined threshold, whether the nozzle assembly (100) is in a gas leakage state; and
transmit, in response to determining whether the nozzle assembly (100) is in the gas leakage state, information about the gas leakage state to an external device.

10. The nozzle assembly (100) of any one of claims 1, 2, 4 and 6-9, wherein a spray angle of at least portion of the at least one spray outlet (1102) is adjustable.

11. A sensor assembly, comprising:
an environmental sensor configured to sense surrounding environmental information; and
the nozzle assembly (100) of any one of claims 1 to 10.

12. The sensor assembly of claim 11, wherein the environmental sensor comprises at least one of a laser radar, a camera, an ultrasonic radar, an infrared radar, or a millimeter wave radar.
